# EUROPÄISCHE PATENTSCHRIFT

(11) **EP 0 683 069 B1**
(45) Veröffentlichungstag und Bekanntmachung des Hinweises auf die Patenterteilung: **13.01.1999**
(21) Anmeldenummer: 95103806.6
(22) Anmeldetag: 16.03.1995
(51) Int. Cl.: B60Q 3/02

(54) **Innenleuchte für Kraftfahrzeuge**
Interior light for vehicle
Eclairage intérieur pour véhicule

(30) Priorität: 26.03.1994 DE 4410583
(43) Veröffentlichungstag der Anmeldung: 22.11.1995
(73) Patentinhaber: Hella KG Hueck & Co., 59552 Lippstadt (DE)
(72) Erfinder: Klassen, Eugen, D-59556 Lippstadt (DE)

(56) Entgegenhaltungen:
- DE-A- 3 703 847
- DE-A- 3 730 284
- US-A- 4 739 224
- US-A- 4 867 498

## Beschreibung

Die Erfindung betrifft eine Innenleuchte für Kraftfahrzeuge, mit einem mehrteiligen Gehäuse, das mindestens eine erste Lichtquelle zur Beleuchtung des Innenraumes des Kraftfahrzeuges und mindestens eine zweite Lichtquelle zur Beleuchtung eines in dem Gehäuse angeordneten Displays aufweist, und mit Schaltmitteln zum gleichzeitigen oder getrennten Ein- und Ausschalten der Lichtquellen, wobei das Display (D) ein LC-Display (D) ist, das zur Anzeige unterschiedlicher Informationen mit einer Ansteuerelektronik (A) verbunden ist, daß die Ansteuerelektronik (A) mit einer elektronischen Schaltung (S) verbunden ist, die Schaltmittel zum Ein- und Ausschalten mindestens der zweiten Lichtquelle (L2) aufweist.

Aus der deutschen Offenlegungsschrift DE 37 30 284 A1 ist eine Innenleuchte für Kraftfahrzeuge bekannt, die ein mehrteiliges Gehäuse aufweist. In dem Gehäuse sind Lichtquellen zur Beleuchtung des Innenraumes des Kraftfahrzeuges angeordnet. Die Innenleuchte weist zudem ein Display zur Anzeige der Uhrzeit, der Innenraumtemperatur oder der Außentemperatur auf. Die Lichtquellen stehen mit einem Schaltmittel in Verbindung, das in der Stromversorgung angeordnet ist und in bekannter Weise als ein Mehrfachschalter ausgebildet ist, mit den Schaltstellungen "Aus", "Betätigung der Innenleuchte über die Türkontakte des Kraftfahrzeuges" und "Dauerlicht". Bei der bekannten Innenleuchte erweist sich als nachteilig, daß das Display nur zur Anzeige der Uhrzeit, der Innenraumtemperatur oder der Außentemperatur geeignet ist. Zudem erweist sich als nachteilig, daß die Innenleuchte und insbesondere das Display bei dem üblichen Einbau im Dachbereich des Fahrzeuges nicht vor Überhitzung geschützt ist. Bei Sonneneinstrahlung auf das Fahrzeug und Inbetriebnahme der Innenleuchte heizt sich diese so stark auf, daß Bauteile der Innenleuchte, insbesondere das Display zerstört werden können. Die Verwendung von Materialien, die den erhöhten Temperaturen standhalten, führen zu einer kostenintensiven Ausführung der Innenleuchte.

Aus der Patentschrift US-A 4 739 224 sind neben den Merkmalen, die wie oben angeführt der DE 37 30 284 A1 entnehmbar sind zusätzlich die Merkmale entnehmbar, daß das Display ein LC-Display ist, das zur Anzeige unterschiedlicher Informationen mit einer Ansteuerelektronik verbunden ist. Die Ansteuerelektronik weist dabei eine elektronische Schaltung auf, die es ermöglicht, Lichtquellen ein- und auszuschalten. Auch bei dieser Innenleuchte erweist sich als nachteilig, daß bei dem üblichen Einbau im Dachbereich des Fahrzeuges, diese nicht vor Überhitzung geschützt ist. Bei zusätzlicher Erwärmung der Leuchte` wenn die Lichtquellen eingeschaltet sind, durch die Sonneneinstrahlung können Bauteile der Leuchte, insbesondere das Display zerstört werden.

Der Erfindung liegt die Aufgabe zugrunde, eine Innenleuchte für Kraftfahrzeuge zu schaffen, die eine beleuchtete Anzeigeeinrichtung für die Anzeige von unterschiedlichen Informationen aufweist, die in jeder Situation eine gute Erkennbarkeit gewährleistet, die trotz des Einbaus im Dachbereich des Fahrzeuges bestmöglich vor Überhitzung geschützt ist und die kostengünstig herstellbar ist.

Die Aufgabe wird erfindungsgemäß durch die Merkmale des Anspruchs 1 gelöst.

Es ist von Vorteil, daß das Display ein LC-Display ist, daß zur Anzeige unterschiedlicher Informationen mit einer Ansteuerelektronik verbunden ist, wodurch unterschiedliche sich ändernde Informationen, die sowohl aus alphanumerischen Daten als auch aus Symbolen bestehen können, angezeigt werden können. Durch die Beleuchtung des LC-Displays in Art einer Hinterleuchtung wird eine bestmögliche Erkennbarkeit der anzuzeigenden unterschiedlichen Informationen gewährleistet.

Es ist vorteilhaft, daß die Ansteuerelektronik mit einer elektronischen Schaltung verbunden ist, die Schaltmittel zum Ein- und Ausschalten mindestens der zweiten Lichtquelle aufweist, wodurch sichergestellt wird, daß eine Beleuchtung des Displays immer dann erfolgt, wenn abhängig von den Betriebsbedingungen des Kraftfahrzeuges Informationen über das Display angezeigt werden.

Dadurch, daß dem LC-Display eine Schutzschaltung mit mindestens einem Temperaturfühler zur Dimmung und/oder Abschaltung mindestens einer der Lichtquellen bei Überschreiten eines vorgegebenen Temperaturschwellwertes zugeordnet ist, ergibt sich der Vorteil, daß zum Beispiel bei starker Sonneneinstrahlung auf das Kraftfahrzeug die Innenleuchte nicht zusätzlich durch den Betrieb der Lichtquellen aufgeheizt wird und somit die Gefahr der Beschädigung der Bauteile der Innenleuchte, insbesondere des Displays durch Überhitzung nicht besteht. Zudem können hierdurch Bauteile für die Innenleuchte verwendet werden, die auf niedrigere Temperaturen ausgelegt sind, wodurch die Innenleuchte günstig herstellbar ist.

Durch die angegebenen Merkmale wird zudem erreicht, daß die von dem Display dargestellten Informationen in jeder Situation gut erkennbar sind, da bei starker Sonneneinstrahlung auf das Kraftfahrzeug, bei der die zweite Lichtquelle und/oder die erste Lichtquelle temperaturbedingt gedimmt und/oder abgeschaltet werden, aufgrund der gegebenen hohen Helligkeit im Kraftfahrzeug die Ablesbarkeit des LC-Displays erhalten bleibt.

Es ist von Vorteil, daß der Temperaturfühler mindestens ein in der Stromversorgung der ersten und/oder der zweiten Lichtquelle angeordneter Thermistor ist, wodurch eine besonders einfache und kostengünstige temperaturabhängige Abschaltung der Lichtquellen ermöglicht wird.

Dadurch, daß der Temperaturfühler Teil einer Einrichtung zur Regelung der Innenraumtemperatur ist, ergibt sich der Vorteil, daß in kostengünstiger Art und Weise auf ein schon im Kraftfahrzeug bestehendes Bauteil zur temperaturbedingten Abschaltung der Lichtquellen zurückgegriffen werden kann.

Es ist von Vorteil, daß der Temperaturfühler mit der Schutzschaltung verbunden ist, daß die Schutzschaltung Teil der elektronischen Schaltung ist und daß die elektronische Schaltung alle Schaltmittel zur Dimmung und/oder zum Ein- und Ausschalten aller Lichtquellen der Innenleuchte aufweist, wodurch eine besonders einfache und kostengünstige Ausführungsform ermöglicht wird, bei der eine hohe Sicherheit für den Betrieb der Innenleuchte und des in der Innenleuchte angeordneten LC-Displays gewährleistet wird.

Dadurch, daß die elektronische Schaltung mit allen Leuchten, die im Innenraum des Kraftfahrzeuges zur Dimmung und/oder zum Ein- und Ausschalten dieser verbunden ist, ergibt sich eine besonders einfache und kostengünstige Ausführungsform, die es ermöglicht, mit nur einem Temperaturfühler und nur einer elektronischen Schaltung eine Schutzfunktion für alle im Innenraum des Kraftfahrzeuges angeordneten Leuchten zu erzeugen.

Dadurch, daß der Temperaturfühler in dem Gehäuse angeordnet ist, ergibt sich zum einen der Vorteil, daß die Temperatur in dem Gehäuse der Innenleuchte bestmöglich gemessen wird und zum anderen ergibt sich der Vorteil, daß ein möglichst kompakter einfacher Aufbau der Innenleuchte gewährleistet wird.

Ein Ausführungsbeispiel des Erfindungsgegenstandes ist in den Zeichnungen dargestellt und wird im folgenden anhand der Zeichnungen beschrieben.

Gleiche oder gleichwirkende Bauteile sind in allen Figuren mit den gleichen Bezugszeichen versehen.

Es zeigen
- Figur 1: eine Draufsicht auf ein Ausführungsbeispiel einer erfindungsgemäßen Innenleuchte;
- Figur 2: einen Längsschnitt durch eine Innenleuchte gemäß Figur 1;
- Figur 3: eine schematische Schaltungsanordnung des Erfindungsgegenstandes;
- Figur 4: eine Prinzipskizze eines hinterleuchteten Displays;
- Figur 5: eine beispielhafte Schaltungsanordnung zum Betrieb der Innenleuchte.

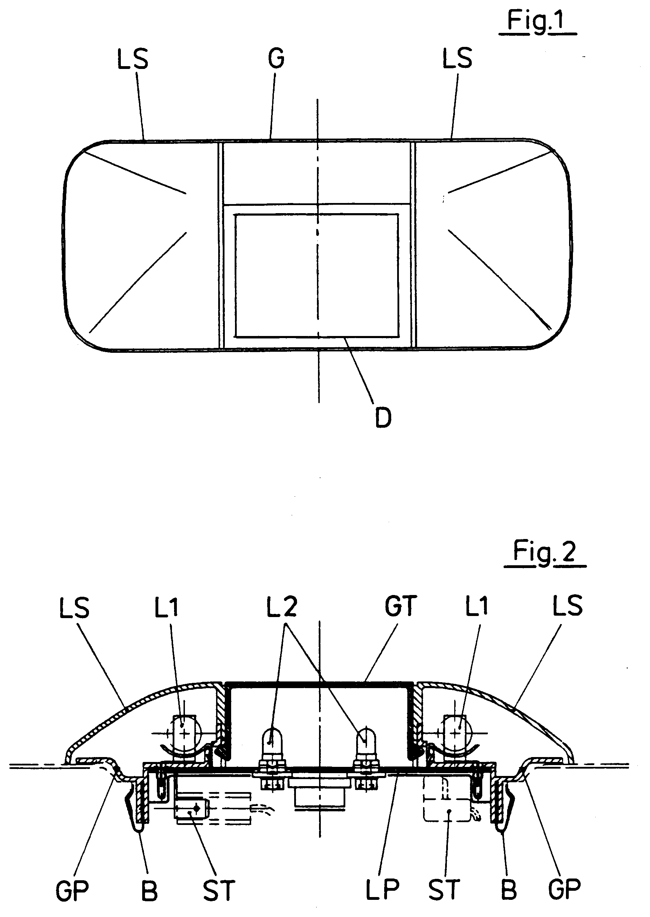

Figur 1 zeigt eine Draufsicht auf ein Ausführungsbeispiel einer erfindungsgemäßen Innenleuchte. Diese weist ein mehrteiliges Gehäuse (G) mit zwei außenliegenden Lichtscheiben (LS) und einem in dem Gehäuse (G) angeordneten Display (D) auf. Die Innenleuchte weist eine dachförmige Gestaltung auf, so daß das Display (D) schräg angeordnet ist und bei einem Dacheinbau der Innenleuchte im Blickfeld des Betrachters liegt. Das Display ist als ein LC-Display (D) ausgebildet und ist zur Anzeige unterschiedlicher Informationen geeignet. Das LC-Display (D) kann dabei als eine Schwarz-Weiß-Anzeige ausgebildet sein, es kann aber auch als eine Farb-Anzeige ausgebildet sein. Des weiteren kann das LC-Display (D) je nach den anzuzeigenden Informationen in mehrere Bereiche aufgeteilt sein. Bei einem anderen Ausführungsbeispiel der Innenleuchte können die Anordnung der Lichtscheiben (LS), deren Anzahl und die Anordnung und Größe des LC-Displays (D) anders ausgebildet sein.

Figur 2 zeigt einen Längsschnitt durch die in Figur 1 dargestellte Innenleuchte. Das mehrteilige Gehäuse (G) ist hier beispielhaft aus einem Gehäuseteil (GT), zwei Lichtscheiben (LS), einer Grundplatte (GP) und einer elektrischen Leiterplatte (LP) aufgebaut. Zur selbstrastenden Befestigung der Innenleuchte in dem Ausschnitt eines Fahrzeugdachhimmels sind Befestigungselemente (B) vorgesehen. Zum elektrischen Anschluß der Innenleuchte sind Steckverbinder (ST) vorgesehen. Bei dem hier gezeigten Ausführungsbeispiel ist unter jeder der Lichtscheiben (LS) eine erste Lichtquelle (L1) zur Beleuchtung des Innenraumes des Kraftfahrzeuges angeordnet. Über mindestens einen der Steckverbinder (ST) sind die ersten Lichtquellen (L1) mit Schaltmitteln verbunden zum gleichzeitigen oder getrennten Ein- und Ausschalten. In dem mittleren Bereich der Innenleuchte sind beispielhaft zwei zweite Lichtquellen (L2) angeordnet, die das in Figur 1 gezeigte LC-Display (D) zur besseren Erkennbarkeit der anzuzeigenden Informationen hinterleuchten. Die zweiten Lichtquellen (L2) sind über mindestens einen der Steckverbinder (ST) elektrisch leitend mit Schaltmitteln zum Ein- und Ausschalten verbunden. Bei dem hier gezeigten Ausführungsbeispiel haben die ersten Lichtquellen (L1) eine höhere Leistungsaufnahme als die zweiten Lichtquellen (L2). Die in Figur 1 und Figur 2 gezeigte Ausführungsform einer Innenleuchte ist für den Einbau im Dachhimmel des Fonds eines Kraftfahrzeuges geeignet.

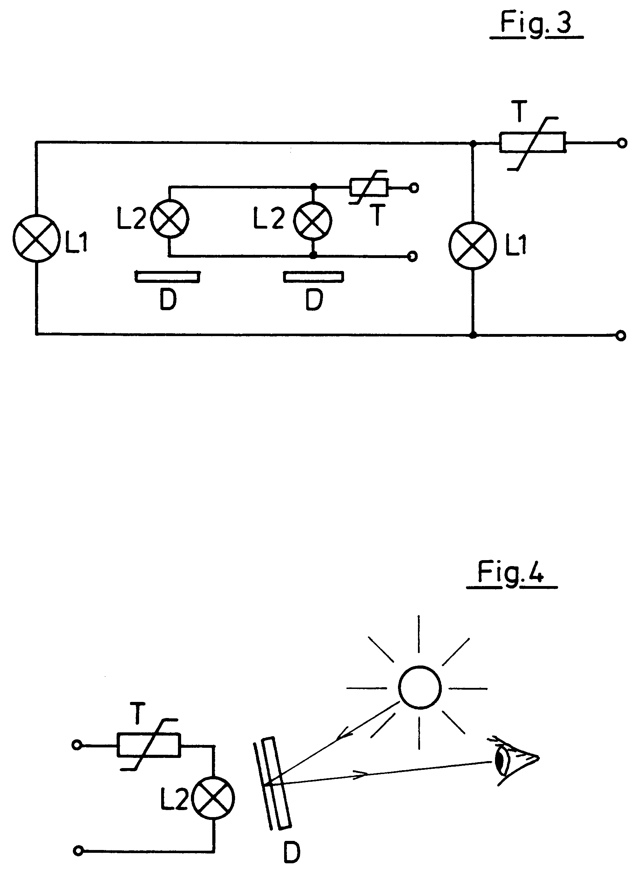

Figur 3 zeigt ein Prinzipschaltbild einer Schutzschaltung für die in Figur 1 und Figur 2 gezeigte Ausführung einer Innenleuchte für Kraftfahrzeuge. Die ersten Lichtquellen (L1) zur Beleuchtung des Innenraumes des Kraftfahrzeuges werden über einen ersten St romversorgungskreis bestromt. Die ersten Lichtquellen (L1) sind dabei in Parallelschaltung angeordnet. Zum temperaturabhängigen Abschalten der ersten Lichtquellen (L1) ist in dem Stromversorgungskreis in Reihe zu den ersten Lichtquellen (L1) ein Temperaturfühler (T) angeordnet, der als ein Thermistor (T) und insbesondere als ein PTC-Widerstand ausgebildet ist. Entsprechend dem temperaturabhängigen Widerstandsverlauf des Thermistors (T) erhöht sich bei einer vorgegebenen Temperatur der Widerstandswert derart, daß die Stromzufuhr zu den ersten Lichtquellen (L1) reduziert bzw. unterbrochen wird. Die zweiten Lichtquellen (L2) sind bei dem hier gezeigten Ausführungsbeispiel über einen zweiten Stromversorgungskreis mit der Versorgungsspannung verbindbar. Auch in diesem Stromversorgungskreis sind die zweiten Lichtquellen (L2) parallel zueinander angeordnet und ist in Reihe zu den Lichtquellen (L2) ein Temperaturfühler (T), der als ein Thermistor (T) ausgebildet ist, angeordnet. Die Funktionsweise entspricht dabei der oben beschriebenen. Die zweiten Lichtquellen (L2) dienen bei dem hier gezeigten Ausführungsbeispiel jeweils zur Hinterleuchtung eines LC-Displays (D). Bei anderen Ausführungsbeispielen braucht je nach der zu erwartenden Selbsterwärmung der Innenleuchte und des LC-Displays (D) durch den Betrieb der Lichtquellen (L1, L2) nur in einem der Stromversorgungskreise ein Thermistor (T) angeordnet sein. Wie unter Figur 2 beschrieben, können die zweiten Lichtquellen (L2) eine geringere Leistungsaufnahme haben als die ersten Lichtquellen (L1). Davon ausgehend kann es ausreichend sein, den Thermistor (T) allein in den ersten, die ersten Lichtquellen (L1) versorgenden Stromversorgungskreis anzuordnen. Andererseits kann, falls die ersten Lichtquellen (L1) weit von dem Display (D) entfernt angeordnet sind, es ausreichend sein, den Thermistor (T) in dem zweiten Stromversorgungskreis, in dem die zweiten Lichtquellen (L2) angeordnet sind, anzuordnen.

Figur 4 zeigt eine prinzipielle Darstellung für die Erkennbarkeit eines LC-Displays (D). Die zweite Lichtquelle (L2) befindet sich in einem Stromversorgungskreis, der zum Beispiel von einer hier nicht gezeigten Ansteuerelektronik immer dann bestromt wird, wenn eine Information durch das LC-Display (D) angezeigt werden muß. Wie in Figur 3 dargestellt, ist auch in Figur 4 in Reihe zu der zweiten Lichtquelle (L2) ein Temperaturfühler (T), der als ein Thermistor (T) ausgebildet ist, in dem Stromversorgungskreis angeordnet. Dieser unterbricht den Strom zu der zweiten Lichtquelle (L2), wenn ein bestimmter Temperaturschwellwert überschritten wird. Bei Unterbrechung der Stromzufuhr zu der zweiten Lichtquelle (L2) wird somit das LC-Display (D) nicht mehr hinterleuchtet. Da die hohe Temperatur, die zu einer Abschaltung der zweiten Lichtquelle (L2) geführt hat, bei dem Einbau der Innenleuchte in dem Dachbereich des Kraftfahrzeuges nur durch intensive Sonneneinstrahlung bedingt sein kann, liegt bei Abschaltung der zweiten Lichtquelle (L2) somit eine hohe Helligkeit in dem Kraftfahrzeug vor. Wie in Figur 4 dargestellt, reicht die hohe Helligkeit im Innenraum des Kraftfahrzeuges aus, das LC-Display (D) in der Art eines transflektilen Displays zu betreiben. Zur Erläuterung ist in Figur 4 eine Sonne, ein Auge und ein Strahlengang zwischen Auge, Display (D) und Sonne dargestellt.

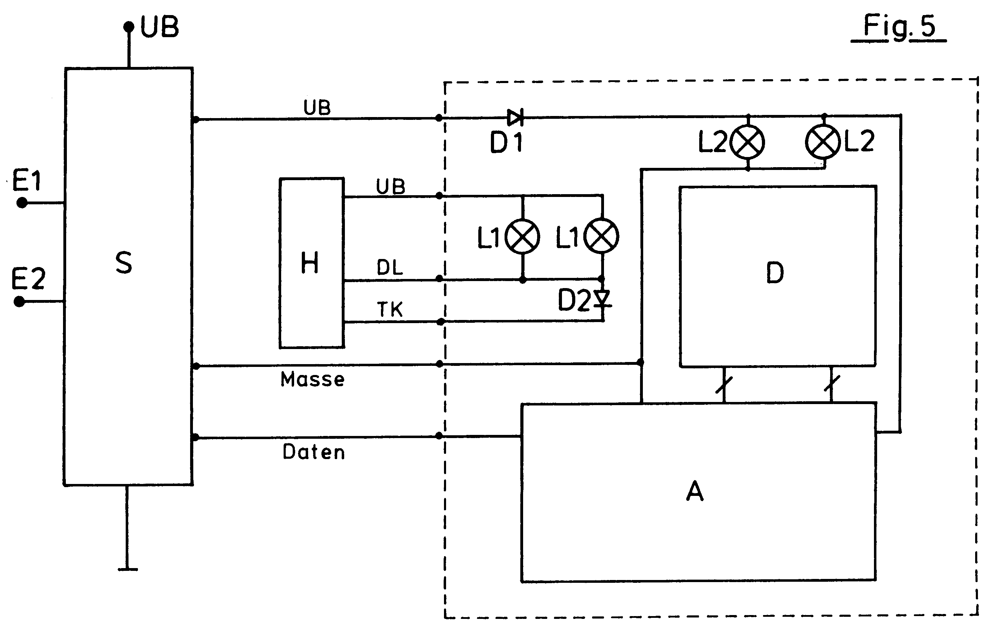

Figur 5 zeigt ein Blockschaltbild einer Schaltungsanordnung zum Betrieb einer erfindungsgemäßen Innenleuchte. Die Schaltungsanordnung umfaßt eine elektronische Schaltung (S), die zum Beispiel als ein Mikroprozessor ausgebildet sein kann, der mit der Versorgungsspannung (UB) und Masse verbunden ist. Die elektronische Schaltung weist mehrere Eingänge (E1, E2) auf, über die zum Beispiel das Signal eines Temperaturfühlers (T), der hier nicht gezeigt ist, der elektronischen Schaltung (S) zugeführt ist. Der Temperaturfühler (T) kann dabei in der Innenleuchte zur Messung der Temperatur der Innenleuchte angeordnet sein. Der Temperaturfühler (T) kann aber auch gleichzeitig ein Teil einer Einrichtung zur Regelung der Innenraumtemperatur sein. Bei dieser Ausführungsform kann der Temperaturfühler (T) zum Beispiel auch im Bereich des Armaturenbretts des Kraftfahrzeuges angeordnet sein. Über weitere Eingänge der elektronischen Schaltung (S) können dieser zum Beispiel Daten oder Steuersignale zugeführt werden. Die elektronische Schaltung (S) kann über solche Eingänge zum Beispiel auch mit einem Bussystem des Kraftfahrzeuges verbunden sein.

Die Schaltung (S) weist Schaltmittel zum Ein- und Ausschalten der zweiten Lichtquellen (L2) auf, deren Stromversorgungskreis mit der Schaltung (S) verbunden ist. In der Anschlußleitung, über die die zweiten Lichtquellen (L2) durch die Schaltung mit der Versorgungsspannung (UB) verbindbar sind, ist eine erste Diode (D1) angeordnet. An diese Anschlußleitung der Schaltung (S) ist zudem die Ansteuerelektronik (A) für das LC-Display (D) angeschlossen. Die zweiten Lichtquellen (L2) und die Ansteuerelektronik (A) sind hier beispielhaft auf eine Masse bezogen, die ebenfalls von der Schaltung (S) zur Verfügung gestellt werden kann. Ist die Schaltung (S) entfernt von der Ansteuerelektronik (A) angeordnet, kann für die angegebenen Stromversorgungskreise auch eine nahe Karosseriemasse gewählt werden. Zwischen der elektronischen Schaltung (S) und der Ansteuerelektronik (A) besteht zudem eine mit dem Wort "Daten" gekennzeichnete Verbindung, über die der Ansteuerelektronik (A) von der Schaltung (S) Daten zur Anzeige von Informationen über das LC-Display (D) zugeführt werden. Die Ansteuerelektronik (A) setzt diese Daten in bekannter Art und Weise in alphanumerische und symbolische Darstellungen um. Die Ansteuerelektronik (A) ist dazu elektrisch leitend mit dem LC-Display (D) verbunden. Die gezeigte Schaltungsanordnung umfaßt zudem den Stromversorgungskreis der ersten Lichtquellen (L1), die den Innenraum des Kraftfahrzeuges beleuchten. Diesem Stromversorgungskreis ist ein Schalter (H) zugeordnet, der in bekannter Art und Weise ein Mehrfunktionsschalter ist. Über einen der Ausgänge des Schalters sind die Lichtquellen (L1), die auch hier beispielhaft in Parallelschaltung angeordnet sind, mit der Versorgungsspannung (UB) verbindbar. Je nach Schaltstellung werden die ersten Lichtquellen (L1) mit Dauerlicht (DL) betrieben oder werden in Abhängigkeit von Türkontaktschaltern (TK) ein- und ausgeschaltet. Zwischen den ersten Lichtquellen (L1) und dem mit TK bezeichneten Eingang des Schalters (H) ist eine zweite Diode (D2) angeordnet.

Bei einem anderen Ausführungsbeispiel können die Signale des Schalters (H) über weitere Eingänge direkt der elektronischen Schaltung (S) zugeführt werden, an die dann auch der Stromversorgungskreis der ersten Lichtquelle (L1) angeschlossen ist und von dieser geschaltet wird. Die elektronische Schaltung (S) umfaßt dabei eine nicht gezeigte Schutzschaltung mit einer Schwellwerterfassung für das über einen der Eingänge (E1, E2) anliegende Temperatursignal, wobei bei Überschreiten eines vorgegebenen Temperaturschwellwertes die ersten und/oder zweiten Lichtquellen (L1, L2) abgeschaltet werden.

Die in Figur 5 gezeigten Bauteile können alle in dem Gehäuse der Innenleuchte angeordnet sein. Bei einem anderen Ausführungsbeispiel kann die elektronische Schaltung (S) außerhalb der Innenleuchte angeordnet sein. Bei einem weiteren Ausführungsbeispiel können an die elektronische Schaltung (S) weitere Innenleuchten des Kraftfahrzeuges zur gleichzeitigen oder getrennten Ein- und Ausschaltung angeschlossen sein. Als besonders vorteilhaft erweist es sich dabei, wenn bei Überschreiten des vorgegebenen Temperaturschwellwertes zum Schutz der Leuchten alle Leuchten im Innenraum des Kraftfahrzeuges ausgeschaltet werden.

### Bezugszeichenliste

### Innenleuchte für Kraftfahrzeuge

- A: Ansteuerelektronik
- B: Befestigungselement
- D: Display
- D1, D2: Dioden
- E1, E2: Eingänge
- G: Gehäuse
- GP: Grundplatte
- GT: Gehäuseteil
- H: Schalter
- L1, L2: Lichtquellen
- LP: Leiterplatte
- LS: Lichtscheibe
- S: Schaltung
- ST: Steckverbinder
- T: Temperaturfühler
- UB: Versorgungsspannung

## Patentansprüche

1. Innenleuchte für Kraftfahrzeuge, mit einem mehrteiligen Gehäuse (G), das mindestens eine erste Lichtquelle (L1) zur Beleuchtung des Innenraumes des Kraftfahrzeuges und mindestens eine zweite Lichtquelle (L2) zur Beleuchtung eines in dem Gehäuse (G) angeordneten Displays (D) aufweist, und mit Schaltmitteln zum gleichzeitigen oder getrennten Ein- und Ausschalten der Lichtquellen (L1, L2), wobei das Display (D) ein LC-Display (D) ist, das zur Anzeige unterschiedlicher Informationen mit einer Ansteuerelektronik (A) verbunden ist, daß die Ansteuerelektronik (A) mit einer elektronischen Schaltung (S) verbunden ist, die Schaltmittel zum Einund Ausschalten mindestens der zweiten Lichtquelle (L2) aufweist, dadurch gekennzeichnet, daß dem LC-Display (D) eine Schutzschaltung mit mindestens einem Temperaturfühler (T) zur Dimmung und / oder Abschaltung mindestens einer der Lichtquellen (L1, L2) bei Überschreiten eines vorgegebenen Temperaturschwellwertes zugeordnet ist.

2. Innenleuchte nach Anspruch 1, dadurch gekennzeichnet, daß der Temperaturfühler (T) mindestens ein in der Stromversorgung der ersten und/oder der zweiten Lichtquelle (L1, L2) angeordneter Thermistor ist.

3. Innenleuchte nach Anspruch 1, dadurch gekennzeichnet, daß der Temperaturfühler (T) Teil einer Einrichtung zur Regelung der Innenraumtemperatur ist.

4. Innenleuchte nach Anspruch 3, dadurch gekennzeichnet, daß der Temperaturfühler (T) mit der Schutzschaltung verbunden ist, daß die Schutzschaltung Teil der elektronischen Schaltung (S) ist und daß die elektronische Schaltung (S) alle Schaltmittel zur Dimmung und/oder zum Ein- und Ausschalten aller Lichtquellen (L1, L2) der Innenleuchte aufweist.

5. Innenleuchte nach Anspruch 4, dadurch gekennzeichnet, daß die elektronische Schaltung (S) mit allen Leuchten im Innenraum des Kraftfahrzeuges zur Dimmung und/oder zum Ein- und Ausschalten dieser verbunden ist.

6. Innenleuchte nach mindestens einem der vorstehenden Ansprüche, dadurch gekennzeichnet, daß der Temperaturfühler (T) in dem Gehäuse (G) angeordnet ist.

## Claims

1. Interior light for motor vehicles, having a multi-part housing (G) which has at least one first light source (L1) for illumination of the interior space of the motor vehicle and at least one second light source (L2) for illumination of a display (D) arranged in the housing (G), and having switching means for simultaneously or separately switching the light sources (L1, L2) on or off, the display (D) being a liquid crystal display (D) connected to an electronic control unit (A) for the display of differing information, the electronic control unit (A) being connected to an electronic circuit (S) which has switching means for at least switching the second light source (L2) on and off, characterised in that the liquid crystal display (D) has a protective circuit associated with it that has at least one temperature sensor (T) for dimming and/or turning off at least one of the light sources (L1, L2) when a predetermined temperature threshold value is exceeded.

2. Interior light according to claim 1, characterised in that the temperature sensor (T) is at least one thermistor arranged in the power supply of the first and/or the second light source (L1, L2).

3. Interior light according to claim 1, characterised in that the temperature sensor (T) forms part of a device for regulating the temperature of the interior space.

4. Interior light according to claim 3, characterised in that the temperature sensor (T) is connected to the protective circuit, that the protective circuit forms part of the electronic circuit (S), and that the electronic circuit (S) has all the switching means for dimming and/or for switching all light sources (L1, L2) of the interior light on and off.

5. Interior light according to claim 4, characterised in that the electronic circuit (S) is connected to all the lights in the interior space of the motor vehicle for dimming and/or for switching them on and off.

6. Interior light according to one of the preceding claims, characterised in that the temperature sensor (T) is arranged in the housing (G).

## Revendications

1. Lampe d'intérieur pour véhicules, comportant un boîtier (G) en plusieurs parties, qui présente au moins une première source de lumière (L1) pour éclairer l'habitacle du véhicule et au moins une seconde source de lumière (L2) pour éclairer un affichage (D) agencé dans le boîtier (G), et comportant des moyens de commutation pour allumer et éteindre simultanément ou séparément les sources de lumière (L1, L2), l'affichage (D) étant un affichage à cristaux liquides (D) qui est relié à un système électronique de pilotage (A) pour afficher différentes informations, en ce que le système électronique (A) est relié à un circuit électronique (S) qui présente des moyens de commutation pour allumer et éteindre au moins la seconde source de lumière (L2), caractérisée en ce qu'à l'affichage à cristaux liquides (D) est associé un circuit protecteur avec au moins un palpeur de température (T) pour varier et/ou éteindre au moins une des sources de lumière (L1, L2) lorsqu'une valeur seuil de température prédéterminée est dépassée.

2. Lampe d'intérieur selon la revendication 1, caractérisée en ce que le palpeur de température (T) est au moins un thermistor agencé dans l'alimentation électrique de la première et/ou de la seconde source de lumière (L1, L2).

3. Lampe d'intérieur selon la revendication 1, caractérisée en ce que le palpeur de température (T) fait partie d'un dispositif de réglage de la température de l'habitacle.

4. Lampe d'intérieur selon la revendication 3, caractérisée en ce que le palpeur de température (T) est relié au circuit protecteur, en ce que le circuit protecteur fait partie du circuit électronique (S) et en ce que le circuit électronique (S) présente tous les moyens de commutation pour varier et/ou allumer et éteindre toutes les sources de lumière (L1, L2) de la lampe d'intérieur.

5. Lampe d'intérieur selon la revendication 4, caractérisée en ce que le circuit électronique (S) est relié à toutes les lampes dans l'habitacle du véhicule pour varier et/ou pour allumer et éteindre celles-ci.

6. Lampe d'intérieur selon au moins une quelconque des revendications précédentes, caractérisée en ce que le palpeur de température est agencé dans le boîtier (G).
